# EUROPÄISCHE PATENTSCHRIFT

(11) **EP 3 135 162 B1**
(45) Veröffentlichungstag und Bekanntmachung des Hinweises auf die Patenterteilung: **07.07.2021**
(21) Anmeldenummer: 16184448.5
(22) Anmeldetag: 17.08.2016
(51) Int. Cl.: A47J 31/56, A47J 31/46, A47J 31/52

(54) **VORRICHTUNG ZUR BEREITUNG EINES HEISSGETRÄNKES UND VERWENDUNG EINER SOLCHEN VORRICHTUNG**
DEVICE FOR PREPARING A HOT BEVERAGE AND USE OF SUCH
DISPOSITIF DE PREPARATION D'UNE BOISSON CHAUDE ET UTILISATION D'UN TEL DISPOSITIF

(30) Priorität: 19.08.2015 DE 202015104399 U
(43) Veröffentlichungstag der Anmeldung: 01.03.2017
(73) Patentinhaber: Eugster/Frismag AG, 8580 Amriswil (CH)
(72) Erfinder: Zwahlen, Christof, 8590 Romanshorn (CH)
(74) Vertreter: Patent- und Rechtsanwälte Behrmann Wagner PartG mbB

(56) Entgegenhaltungen:
- EP-A1- 1 676 509
- DE-A1-102007 053 253
- US-A1- 2006 096 465
- None

## Beschreibung

Die vorliegende Erfindung betrifft eine Vorrichtung zur Bereitung eines Heißgetränks nach dem Oberbegriff des Hauptanspruchs. Ferner betrifft die vorliegende Erfindung eine Verwendung einer derartigen Bereitungsvorrichtung. Eine derartige Vorrichtung ist aus der US 2006/0096465 A1 bekannt.

Aus dem Stand der Technik sind in Form gängiger und marktüblicher Portionskaffeemaschinen gattungsbildende Bereitungsvorrichtungen allgemein bekannt; der Getränkerohstoff, bevorzugt und geeignet als kapselartige Einzelportionsverpackung vorgesehen, wird zu diesem Zweck in eine ansonsten bekannte Brüheinheit des Gehäuses eingeführt und mit erwärmtem Wasser mit einem Druck zwischen ca. 10bar und 16bar durchströmt, wodurch dann ein Heißgetränk, hier Kaffee, im Kontakt mit dem Getränkerohstoff bereitet und in ansonsten bekannter Weise über einen Auslass in einen zum Genuss vorgesehenen Behälter ausgetragen werden kann.

Die zum Erwärmen des - aus einem gehäuseinternen Tank, alternativ direkt über einen Frischwasseranschluss des Gehäuses herangeführten - Wassers vorgesehene Erwärmungsvorrichtung ist üblicherweise als Thermoblockheizung realisiert. Hier wird das Wasser beim - pumpengetriebenen - Transport durch einen Heizkörper elektrisch beheizt, wobei die Anordnung blockartig ausgestaltet ist.

Der Erwärmungsvorrichtung zugeordnete erste Regelmittel, insbesondere in Form einer ein Temperatur-Sollwertsignal verarbeitenden elektronischen Regelschaltung, sind vorgesehen, um das aus der Erwärmungsvorrichtung austretende Heißwasser auf einen für die Brüheinheit vorgesehenen bzw. geeigneten Temperaturwert zu regeln. Insbesondere vor dem Hintergrund einer Empfindlichkeit des Getränkerohstoffs für Abweichungen von dem Temperatursollwert kommt einer Beherrschung dieser Temperaturregelung Bedeutung zu. In ansonsten bekannter Weise erfolgt die Temperaturdetektion der Erwärmungsvorrichtung unter Nutzung eines temperaturveränderlichen elektrischen Widerstands.

Im Hinblick auf eine gleichbleibende Qualität des ausgebrachten Heißgetränks, insbesondere auch angesichts veränderlicher Druckverhältnisse vom Tank- bzw. Frischwasseranschluss bis zur Braueinheit, haben sich jedoch gattungsgemäße Technologien als verbesserungsbedürftig erwiesen: So führt etwa im Fall einer sogenannten Kapselmaschine, d.h. einer Verarbeitung von kapselartigen Portionsverpackungen etwa für Kaffeemehl in der Brüheinheit, ein Betriebszeitpunkt vor einem Öffnen einer solchen Kapsel, bevor diese dann vom erwärmten Wasser durchströmt wird, zu einer Druckänderung im Wasserstrom, welche dann, entsprechend einem bekannten Verhalten der Pumpenmittel, zu einer ungleichmäßigen Durchströmung führt, mit entsprechend nachteiligen Effekten auf die Qualität des ausgebrachten Heißgetränks; letztendlich ist etwa eine zu kurze Einwirkzeit des die Kapsel durchströmenden Wassers ebenso zu vermeiden wie eine zu lange Durchströmungszeit, wobei, entsprechend einer vorbestimmten Portionierung bzw. einem vorbestimmten/m Wasser-Volumenmaß, die Mess- bzw. Detektionsmittel für den Wasserdurchfluss, im Zusammenwirken mit einem geeigneten, durch eine zentrale Steuereinheit bestimmten Zeitgeber, eine derartige (konstante) Volumenmenge ausbringen, nur eben in gattungsgemäßer Weise mit der Problematik inhomogener, nicht konstanter Einwirkungszeiten der (konstanten) Wassermenge auf den Getränkerohstoff.

Zwar wäre es theoretisch denkbar, etwa mit der Brüheinheit und/oder der Erwärmungsvorrichtung geeignet zuzuordnenden, steuerbaren Ventilen diese Problematik auszuregeln bzw. für jeweilige Betriebszustände im Durchflussverhalten zu optimieren, jedoch bedingt dies zusätzlichen konstruktiven und Bauteileaufwand, welcher insbesondere für ein für die vorliegende Technologie bevorzugtes Anwendungsgebiet der in Großserie gefertigten Haushalts- bzw. Privatverbrauchergeräte ungünstig ist; hier ist vielmehr eine insgesamt aufwandsminimierte und in den Herstellungskosten günstige Ausgestaltung einer Heißgetränk-Bereitungsvorrichtung anzustreben.

Zum weiteren Stand der Technik ist zu verweisen auf die EP 1 676 509 A1 sowie die DE 10 2007 053 253 A1.

Aufgabe der vorliegenden Erfindung ist es daher, eine Vorrichtung zur Bereitung eines Heißgetränks nach dem Oberbegriff des Hauptanspruchs im Hinblick auf ihre Betriebseigenschaften zu verbessern, dabei insbesondere für einen vergleichmäßigten Eintrag des zu erwärmenden Wasser in die Erwärmungsvorrichtung und nachfolgend des erwärmten Wassers in die Brüheinheit zu sorgen, wobei insbesondere sicherzustellen ist, dass die Beheizungsvorrichtung nicht mit sich sprunghaft ändernden Wasserströmen beaufschlagt wird, um insoweit nachteilige und insoweit wiederum für das nachfolgende Brühverhalten potenziell schädliche Temperaturschwankungen, sei es durch eine Wassermenge selbst, oder durch ein überschwingendes Regelverhalten von der Erwärmungsvorrichtung zugeordneten ersten Regelmitteln zur Temperaturregelung, zu vermeiden. Dabei ist eine kostengünstig herstellbare, betriebssichere und insbesondere auch für die Großserienfertigung taugliche Vorrichtung zu schaffen.

Die Aufgabe wird durch eine Vorrichtung zur Bereitung eines Heißgetränks mit den Merkmalen des Hauptanspruchs gelöst; vorteilhafte Weiterbildungen der Erfindung sind in den Unteransprüchen beschrieben. Zusätzlicher Schutz im Rahmen der Erfindung wird beansprucht für eine Verwendung einer derartigen Vorrichtungstechnologie für die Verarbeitung von in Kapseln portionierten Getränkerohstoffen, insbesondere Kaffeemehl. Die Erfindung ist jedoch nicht auf diesen besonderen Anwendungsfall beschränkt, sondern sie eignet sich gleichermaßen auch für andere Bereitungssysteme, wie sie etwa in Form von Vollautomaten mit einer vorgeschalteten Verarbeitung von Bohnen als Rohmaterial durch Portionierung und Mahlen existieren.

In erfindungsgemäß vorteilhafter Weise sind den Pumpenmitteln zweite Regelmittel zum Regeln des Wasserdurchflusses durch die Pumpe auf einen Durchfluss-Sollwert zugeordnet. Diese üben ihre Regelfunktionalität, welche im Rahmen der Erfindung einer PI-Regelfunktion folgt und damit vorteilhaft die Eigenschaften einer PI-Regelung als praktisch überschwingungsfreies Regelverhalten ausnutzt, in Abhängigkeit einerseits von einem Detektions-Ausgangssignal der Mess- bzw. Detektionsmittel für den Wasserdurchfluss, andererseits als Reaktion auf einen Durchfluss-Sollwert als Regelsollwert aus. Dieser Durchfluss-Sollwert ist erfindungsgemäß vorteilhaft in Abhängigkeit von einem elektrischen Leistungsparameter der Erwärmungsvorrichtung, insbesondere dessen (maximaler) Leistungsaufnahme, vorbestimmt bzw. eingestellt, so das sich eine einfache und betriebssichere Optimierung des Betriebsverhaltens in der Abstimmung der beteiligten Aggregate ergibt. Insbesondere liegt es im Rahmen der Erfindung, den den zweiten Regelmitteln vorzugebenden Durchfluss-Sollwert auf ein Verhältnismaß V zwischen 5 und 8,5 einzustellen, wobei zur Bestimmung dieses Verhältnismaßes V die Beziehung (elektrische Maximal-Leistungsaufnahme der Erwärmungsvorrichtung [Watt])/(Durchfluss-Sollwert in [ml/min]) gelten soll.

Erfindungsgemäß hat es sich dabei herausgestellt, dass eine Abstimmung der zweiten Regelmittel durch einen im Rahmen dieses Verhältnisbereichs in Abhängigkeit von der elektrischen Leistungsaufnahme des (bevorzugt als Thermoblock oder mittels eines Thermoblocks realisierten) Erwärmungsvorrichtung besonders günstig ist, um in der vorbeschriebenen Weise das Heißgetränk, weiter bevorzugt Kaffe, aus der erfindungsgemäßen Vorrichtung auszutragen, nachdem zuvor eine zugehörige Wassermenge optimiert erwärmt und entsprechend einem optimierten Einwirkungszeitraum in die Braueinheit eingetragen wurde.

Erfindungsgemäß ist die Regelung der (bevorzugt als Thermoblock ausgestalteten) Erwärmungsvorrichtung mittels einer PD-Regelfunktionalität ausgebildet. Insbesondere beim Abgleich beider Regefunktionen ist dann wiederum zusätzlich und erfindungsgemäß weiterbildend bevorzugt, eine Regelzeitkonstante einer Regelfunktion der zweiten Regelmittel (also PI) länger zu wählen bzw. einzurichten als eine Regelzeitkonstante einer durch die ersten Regelmittel eingerichteten Regelfunktion (also der PD-Regelung). Zusätzlich weiterbildend liegt ein bevorzugtes Verhältnis dieser unterschiedlichen Regelzeitkonstanten größer als 5, noch weiter bevorzugt größer als 10.

In der technisch-praktischen Realisierung der Erfindung hat es sich besonders bevorzugt herausgestellt, die Pumpenmittel als Schwingankerpumpe bzw. Vibrationspumpe auszugestalten. Gerade im Fall der noch weiter bevorzugten Schwingankerpumpe bietet es sich dann an, die Pumpenmittel mittels eines durch Phasenanschnitt modulierten Wechselsignals anzusteuern, alternativ durch ein in der Pulsweite moduliertes gepulstes Signal, wobei beide Ansteuerungsvarianten ansonsten als aus dem Stand der Technik bekannt vorauszusetzen sind und, wie auch eine bevorzugte Realisierung sowohl der ersten, als auch der zweiten Regelmittel, innerhalb einer Mikroprozessor-, bzw. Mikrocontrollerinfrastruktur für eine zentrale Steuereinheit der Vorrichtung erfolgt, welche nicht nur eine einfache und herstellungstechnisch günstige Umsetzung dieser Technologien samt deren Integration ermöglicht, sondern auch, etwa mittels geeigneter programmierbarer bzw. anpassbarer Festwertspeicher, eine ggf. an verschiedene Pumpentypen bzw. insbesondere auch Leistungsparameter eines jeweils eingesetzten Thermoblocks anpassbare Parametrisierung, zu welcher auch die erfindungsgemäße Einstellung bzw. Vorgabe des Durchfluss-Sollwerts in Abhängigkeit vom elektrischen Leistungsparameter etwa eines Thermoblocks gehört.

Die vorliegende Erfindung eignet sich in besonders bevorzugter Weise, da dass Zusammenwirken zwischen einer Schwingankerpumpe für die Pumpenmittel und einer Thermoblockheizung für die Erwärmungsvorrichtung zu optimieren; beide Umsetzungen der jeweiligen Funktionskomponenten stellen nicht nur im vorliegenden Kontext bewährte, kostengünstige Aggregate dar, sie lassen sich insbesondere auch durch die vorliegende Erfindung in besonders geeigneter Weise aneinander bzw. in ihrem jeweiligen Betriebsverhalten aufeinander ausrichten, mit dem aufgabengemäßen Ziel, die Homogenisierung des gleichmäßig erwärmten Wassers durch die Brüheinheit bis zum Austrag des damit qualitätskontrollierten Endprodukt sicherzustellen. Damit ist es wiederum weiterbildend günstig, einen unmittelbar dem Thermoblock zugeordneten Wärmedetektor, etwa einem NTC (Thermistor mit negativem Temperaturkoeffizient) zur Erzeugung eines für die ersten Regelmittel verwendeten Eingangssignals zu benutzen.

Eine wiederum besonders bevorzugte Weiterbildung der Erfindung sieht vor, eine gerade im praktischen Haushaltsbetrieb bzw. an teilweise schwankenden Netzspannungen betriebene Vorrichtung zu verbessern, nämlich mittels der weiterbildungsgemäß vorgesehenen Netzspannungsdetektormittel ein Detektorsignal zu verarbeiten (wiederum zusätzlich weitebildungsgemäß durch erweiterte Funktionalität der vorteilhaft ohnehin vorgesehenen Mikroprozessor- bzw. Mikrocontrollermittel), welches einen aktuellen Wert der anliegenden Netzspannung wiedergibt bzw. einem solchen aktuellen Wert proportional ist. Diese vorteilhafte Weiterbildung der Erfindung gestattet es dann, als Reaktion auf dieses Detektorsignal und unter Ausbildung eines Spannungs-Differenzsignals zu einem Spannungs-Sollwert bzw. Spannungs-Normwert einer Netz-Betriebsspannung für die Erwärmungsvorrichtung nachteilige Effekte auszuregeln, bzw. auszugleichen, welche sich aus einem (gegenüber dem Sollwert) zu hohen bzw. niedrigen aktuellen Spannungswert ergeben. So können nämlich für den Betrieb der Erwärmungsvorrichtung (z.B. Thermoblock) anliegende Spannungsabweichungen (zum Soll- bzw. Normwert) mit ihrem entsprechenden - quadratischen - Einfluss auf die Heizleistung zu unerwünschten Temperaturänderungen der Erwärmungsvorrichtung bzw. des darin erwärmten Wassers führen, mit potenziell nachteiligen Auswirkungen auf die - Temperatur beeinflusste - Qualität des erzeugten Heißgetränks. Die entsprechende Weiterbildung würde daher, als Reaktion auf das Detektorsignal und insbesondere die vom Sollwert abweichende Netzspannungsdifferenz bei Netzspannungsschwankungen, die Temperaturregelung der ersten Regelmittel so beeinflussen, dass ein entsprechender Temperaturausgleich zeitnah stattfindet, mithin also netzspannungsbedingte Temperaturvariationen wirksam kompensiert werden können.

Im Ergebnis ermöglicht es die vorliegende Erfindung in herstellungstechnisch und im Hinblick auf einen erforderlichen Hardware-Aufwand günstiger Weise gleichwohl mit leistungsfähigen Betriebseigenschaften und deutlichen Homogenitäts- und Qualitätsverbesserungen bezogen auf das Endprodukt, eine Heißgetränk-Bereitungsvorrichtung zu schaffen, welche zwar in besonders bevorzugter Weise als Portionskaffeemaschine und hier insbesondere zur Verarbeitung von kapselartigen Einzelportionsverpackungen geeignet ist, gleichwohl ist auch die vorliegende Erfindung nicht auf diese bevorzugte Verwendungsform beschränkt.

Weiter Vorteile, Merkmale und Einzelheiten der Erfindung ergeben sich aus der nachfolgenden Beschreibung bevorzugter Ausführungsbeispiele sowie anhand der Zeichnungen; diese zeigen in:

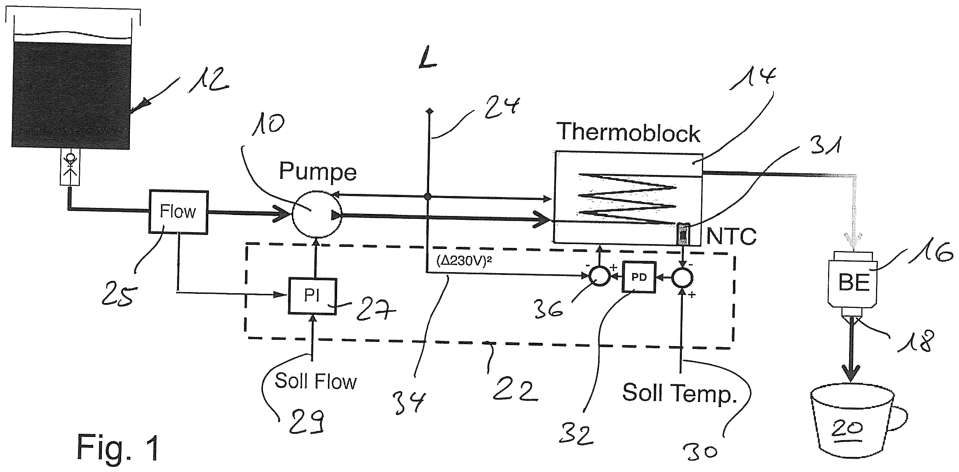

- Fig. 1: ein schematisches Blockschaltbild der Heißgetränk-Zubereitungsvorrichtung gemäß einem ersten bevorzugten Ausführungsbeispiel der Erfindung.

Eine als Schwingankerpumpe 10 ausgestaltete Pumpeneinheit in einem in der Figur nicht gezeigten Gehäuse der Heißgetränk-Zubereitungsvorrichtung fördert Frischwasser aus einem gleichermaßen im oder am Gehäuse vorgesehenen Frischwassertank 12 und bringt dies zu einer als Thermoblock 14 ausgestalteten Erwärmungsvorrichtung (Heizeinheit), aus welcher dann das in ansonsten bekannter Weise erwärmte Wasser in eine Brüheinheit 16 gelangt, welche - wiederum in ansonsten bekannter Weise - zur Aufnahme und Verarbeitung von Kapseln als Portionsverpackungen für Getränkerohstoffe, hier Kaffeemehl, ausgebildet und vorgesehen ist. Aus einem der Brüheinheit 16 nachgeschalteten Auslass 18 tritt dann der fertig gebrühte Kaffee zum Konsum in einen geeignet vorgesehenen Behälter 20 aus. Im Blockschaltbild der Fig. 1 symbolisieren die die Einheiten 12, 10, 14, 16, 20 verbindenden, fett dargestellten Pfeile den Wasserfluss in Strömungsrichtung, von (noch unerwärmtem) Frischwasser bis zum fertigen Heißgetränk.

Den Pumpenmitteln 10 ist eine schematisch als Funktionsblock 22 dargestellte Betriebssteuerungseinheit vorgeschaltet, welche insbesondere eine Steuerung bzw. Veränderung der aus einem Netzspannungsanschluss L des Gehäuses über Netzspannungsleitungen 24 (dünn gezeichnete Pfeile) anliegender Netzspannung vornimmt. Konkret ist die Betriebssteuerung 22 Teil einer mittels einer Mikrocontrollereinheit realisierten und durch die gestrichelte Umrandung symbolisierten zentralen elektronischen Verarbeitungseinheit im Gehäuse, welche, geeignet programmiert bzw. mit geeigneten ein- und ausgehenden Schnittstellen und ggf. elektronischer Treiberinfrastruktur versehen, Steuer- und Regelfunktionalitäten für die Pumpenmittel 10, ebenso wie für die Thermoblock-Heizeinheit 14, vornehmen kann.

Zwischen dem Frischwassertank 12 und der Schwingankerpumpe 10 ist eine Durchfluss-Messeinheit 25 (Flowmeter, abgekürzt als FLOW) eingeschleift, welche in ansonsten bekannter Weise ein Durchflussproportionales Detektorsignal erzeugt und eine PI-Regeleinheit 27 zuführt, welche wiederum eine Regelung der Pumpe 10 auf einen Durchfluss-Sollwert (Soll-FLOW), symbolisiert durch die Vorgabengröße 29, vornimmt. Insoweit ist aus den Einheiten 25, 27, 29 und 10 ein Regelkreis für den Pumpen-Durchfluss realisiert. Im praktischen Beispiel einer Kapsel-Kaffeemaschine einer maximalen Heizleistung der Thermoblock-Heizeinheit 14 von 1400 W wird der Durchfluss-Sollwert, insoweit üblicherweise auch entsprechend einem stationären bzw. maximalen Pumpen-Durchflusswert im hier vorliegenden Druckbereich zwischen ca. 12 bar bis 20 bar auf 200 bis 230 ml/min vorgegeben. Im Hinblick auf ein übliches Flüssigkeitsvolumen des auszubringenden Kaffees von ca. 100 bis 150 ml ergibt sich so eine verfahrensmäßig und qualitativ günstige Einwirkdauer von 20 bis 25 sec.

Die zu Betriebssteuerung angesetzte Mikrocontrollereinheit 22 ist dabei bevorzugter Weg zur Implementierung sowohl des Reglers 27, als auch einer PD-Regelungseinheit 32, welche zur Realisierung der ersten Regelmittel und als Reaktion auf ein Temperatur-Detektorsignal eines Thermosensors 31 (NTC) die Temperaturregelung des Thermoblocks 14 entsprechend einer PD-Regelungsfunktion realisiert. Im Verhältnis zur Zeitkonstante des PI-Reglers von typischerweise 3 sec beträgt die Regelungszeitkonstante des PD-Regler typischerweise 300 msec., so dass das Verhältnis der Zeitkonstanten (Regelzeitkonstanten) der zweiten Regelmittel bezogen auf die ersten Regelmittel ca. 10 beträgt (und üblicherweise in einem Bereich zwischen 3 und 30, weiter bevorzugt zwischen 5 und 20, liegt, um erfindungsgemäß vorteilhaft zu wirken).

Das Blockschaltbild der Fig. 1 verdeutlicht eine zusätzliche, vorteilhafte Eigenschaft der Erfindung, nämlich die Möglichkeit, auf eine Höhe der Netzspannung L (bzw. eine Änderung dieser Netzspannung) durch Anpassung der Temperaturregelung des Thermoblocks 14 reagieren zu können. Genauer gesagt liegt über eine Spannungsdetektorleitung 34 ein Momentanwert der Netzspannung an einer schematisch als Differenzverstärker 36 gezeichneten Reglerkomponente an, so dass ein Einfluss der Netzspannung, insbesondere eine (positive oder negative) Abweichung der Netzspannung von einem üblichen NetzspannungsSollwert, etwa 230V, im Rahmen der Temperaturregelung berücksichtigt und ausgeregelt werden kann. Da sich nämlich Spannungsschwankungen, damit Differenzen zu einem Spannungs-Sollwert, quadratisch im Hinblick auf die elektrische Heizleistung im Thermoblock 14 auswirken, besaßen bekannte, nicht im Hinblick auf Netzspannungsschwankungen kompensierte elektrische Heizvorrichtungen das Problem, dass etwa bei einer erhöhten Netzspannung sich diese in unterwünscht hoher Beheizungstemperatur des Thermoblocks niederschlug, welche dann, ggf. erst wiederum mit der Regelverzögerung ausgeregelt werden musste.

Eine unmittelbare Spannungserfassung, wie mittels der Detektoreinheit 34 - etwa in der Praxis realisiert durch einen ohnehin vorhandenen A/D Eingang der Mikrocontrollereinheit 22, ggf. unterstützt durch ein vorgeschaltetes Anpassungsnetzwerk - ermöglicht es nunmehr, bereits unmittelbar diese Spannungsschwankungen im Rahmen der Temperaturregelung zu berücksichtigen und so, wiederum vorteilhaft und analog zur vorstehend erläuterten Funktionalität bei unerwünschten Überschwingern, das Erwärmungsverhalten des Thermoblocks in jedem Betriebszustand, also insbesondere auch bei Spannungsschwankungen, zu vergleichmäßigen.

Im Extremfall lässt sich die gezeigte Kompensation sogar benutzen, um eine - damit automatische - Anpassung an völlig andere Netzspannungsumgebungen, wie etwa eine 110V Umgebung, zu realisieren.

Im Ergebnis entsteht durch die vorliegende Erfindung in hardwaretechnisch äußerst einfacher, dabei leicht zu montierender und betriebssicherer Weise eine Heißgetränk-Bereitungsvorrichtung, welche erhöhte Qualität in Erwärmung und Bereitung des Heißgetränks mit konstruktiver Eleganz kombiniert. Dabei ist die Verwendung als Kaffeemaschine zur Verarbeitung von kapselartigen Portionsverpackungen bevorzugt, diese Verwendung beschränkt jedoch nicht das deutlich größere, universelle Einsatzspektrum der vorliegenden Erfindung.

## Patentansprüche

1. Vorrichtung zur Bereitung eines Heißgetränks mit einer in einem Gehäuse vorgesehenen, elektrisch betriebenen Erwärmungsvorrichtung (14) für aus einem Frischwasseranschluss des Gehäuses oder einem im Gehäuse vorgesehenen Wassertank (12) mittels elektrisch betriebener Pumpenmittel (10) herangeführtes Wasser
und einer der Erwärmungsvorrichtung nachgeordneten Brüheinheit (16), in welcher erwärmtes Wasser mit einem Getränkerohstoff zusammengeführt und über Auslassmittel (18) aus dem Gehäuse ausgetragen werden kann,
wobei der Erwärmungsvorrichtung erste Regelmittel (29, 32, 36) zum Regeln einer Wassertemperatur des erwärmten Wassers auf mindestens einen Wassertemperatursollwert (30) zugeordnet sind,
und zwischen dem Wassertank oder dem Frischwasseranschluss und der Erwärmungsvorrichtung, insbesondere zwischen dem Wassertank oder dem Frischwasseranschluss und den Pumpenmitteln, Mittel (25) zur Messung und/oder Detektion eines Wasserdurchflusses vorgesehen sind, und wobei den Pumpenmitteln zweite Regelmittel (27) zum Regeln des Wasserdurchflusses auf einen Durchflusssollwert (29) zugeordnet sind, die als Reaktion auf ein Detektions-Ausgangssignal der Mess- bzw. Detektionsmittel wirken, **dadurch gekennzeichnet,**
**dass** ein Verhältnis (V) einer maximalen elektrischen Leistungsaufnahme der Erwärmungsvorrichtung in Watt bezogen auf den Durchfluss-Sollwert in ml/min im Bereich zwischen 5 und 8,5 liegt, wobei die von den ersten Regelmitteln realisierte Regelfunktion eine PD-Regelung ist und die von den zweiten Regelmitteln realisierte Regelfunktion eine PI-Regelung ist.

2. Vorrichtung nach einem der Anspruch 1,
**dadurch gekennzeichnet,**
**dass** eine Regler-Zeitkonstante der zweiten Regelmittel länger als
eine Regler-Zeitkonstante der ersten zweiten Regelmittel ist.

3. Vorrichtung nach einem der Ansprüche 1 oder 2,
**dadurch gekennzeichnet,**
**dass** die als Vibrationspumpe oder Schwingankerpumpe ausgebildeten Pumpenmittel von den zweiten Regelmitteln ein durch Phasenanschnitt moduliertes Wechselsignal oder ein in der Pulsweite moduliertes gepulstes Signal empfangen.

4. Vorrichtung nach einem der Ansprüche 1 bis 3,
**dadurch gekennzeichnet,**
**dass** die ersten und die zweiten Regelmittel durch eine bevorzugt gemeinsame Mikrocontroller- oder Mikroprozessoreinheit realisiert sind.

5. Vorrichtung nach einem der Ansprüche 1 bis 4,
**dadurch gekennzeichnet,**
**dass** einem für das elektrische Betreiben der Erwärmungsvorrichtung beschalteten Netzspannungsanschluss der Bereitungsvorrichtung Netzspannungsdetektormittel so zugeordnet sind, dass als Reaktion auf ein von einer aktuell erfassten Netzspannung abhängiges Detektorsignal eine elektronische Beeinflussung einer Regelfunktionalität der ersten Regelmittel, insbesondere eine Berücksichtigung oder Kompensation eines elektrischen Leistungsbeitrags einer von einem Netzspannungssollwert abweichenden Netzspannungsdifferenz auf die Erwärmungsvorrichtung, erfolgen kann.

6. Vorrichtung nach einem der Ansprüche 1 bis 5,
**dadurch gekennzeichnet,**
**dass** die Erwärmungsvorrichtung einen Thermoblock aufweist oder durch einen solchen realisiert ist.

7. Vorrichtung nach einem der Ansprüche 1 bis 6,
**dadurch gekennzeichnet,**
**dass** die Erwärmungsvorrichtung mit Wärmedetektormitteln, insbesondere mit einem einen negativen Temperaturkoeffizienten aufweisenden Thermistor realisiert ist, dessen Ausgangssignal den ersten Regelmitteln anliegt.

8. Verwendung der Bereitungsvorrichtung nach einem der Ansprüche 1 bis 7,
als Portionskaffeemaschine, insbesondere als Kapselkaffeemaschine für den Heim- oder Privatgebrauch, oder als vollautomatische Kaffeemaschine mit der Brüheinheit vorgeschalteten Portionierungsmitteln für geschüttet vorliegende Kaffeebohnen sowie einem Mahlwerk für die Kaffeebohnen.

## Claims

1. A device for preparing a hot beverage comprising
an electrically operated heating device (14) provided in a housing for water supplied from a fresh water connection of the housing or from a water tank (12) provided in the housing by means of electrically operated pump means (10),
and a brewing unit (16) disposed downstream of the heating device, heated water being combinable with a beverage raw material in the brewing unit and being dischargeable from the housing via outlet means (18),
first regulation means (29, 32, 36) for regulating a water temperature of the heated water to at least a water temperature target value (30) being assigned to the heating device,
and means (25) for measuring and/or detecting a water flow being provided between the water tank or the fresh water connection and the heating device, in particular between the water tank or the fresh water connection and the pump means, and second regulation means (27) for regulating the water flow to a flow target value (29) being assigned to the pump means, the second regulation means acting in response to a detection output signal of the measurement or detection means,
**characterized in that**
a ratio (V) of a maximum electric power consumption of the heating device in watts in relation to the flow target value in ml/min is in the range between 5 and 8.5, the regulation function realized by the first regulation means being a PD regulation and the regulation function realized by the second regulation means being a PI regulation.

2. The device according to claim 1,
**characterized in that**
a regulator time constant of the second regulation means is longer than a regulator time constant of the first regulation means.

3. The device according to claim 1 or 2,
**characterized in that**
the pump means, which are realized as a vibration pump or an oscillating armature pump, receive an alternating signal modulated by a phase angle or a pulsed signal modulated in the pulse width from the second regulation means.

4. The device according to any one of claims 1 to 3,
**characterized in that**
the first and the second regulation means are realized by a preferably shared microcontroller or microprocessor unit.

5. The device according to any one of claims 1 to 4,
**characterized in that**
mains voltage detector means are assigned to a mains voltage connection of the preparation device connected for the electrical operation of the heating device in such a manner that,
in response to a detector signal depending on a currently detected mains voltage, a regulation functionality of the first regulation means can be electronically influenced, in particular an electric power proportion of a mains voltage difference differing from a mains voltage target value on the heating device can be considered or compensated for.

6. The device according to any one of claims 1 to 5,
**characterized in that**
the heating device has a thermoblock or is realized by such a thermoblock.

7. The device according to any one of claims 1 to 6,
**characterized in that**
the heating device has heat detector means, in particular a thermistor which has a negative temperature coefficient and the output signal of which is applied to the first regulation means.

8. A use of the preparation device according to any one of claims 1 to 7 as a portioned coffee machine, in particular as a capsule coffee machine for home or private use, or as a fully automatic coffee machine comprising portioning means disposed upstream of the brewing unit for coffee beans provided in bulk, and a grinder for the coffee beans.

## Revendications

1. Dispositif de préparation d'une boisson chaude comprenant un dispositif de chauffage (14) électrique prévu dans un boîtier pour de l'eau qui est fournie par une conduite d'eau douce du boîtier ou par un réservoir d'eau (12) prévu dans le boîtier au moyen de moyens de pompe (10) électriques
et une unité de brassage (16) disposée en aval du dispositif de chauffage, l'eau chauffée pouvant être mélangée avec une matière première de boisson et pouvant sortir du boîtier par des moyens de sortie (18),
des premiers moyens de réglage (29, 32, 36) pour régler une température de l'eau chauffée à au moins une valeur cible de température de l'eau (30) étant assignés au dispositif de chauffage,
et des moyens (25) de mesure et/ou de détection d'un débit d'eau étant prévus entre le réservoir d'eau ou la conduite d'eau douce et le dispositif de chauffage, notamment entre le réservoir d'eau ou la conduite d'eau douce et les moyens de pompe, et des deuxièmes moyens de réglage (27) pour régler le débit d'eau à une valeur cible de débit (29) étant assignés aux moyens de pompe, les deuxièmes moyens de réglage (27) agissant en réponse à un signal de sortie de détection des moyens de mesure ou de détection,
**caractérisé en ce**
**qu'**un rapport (V) d'une puissance électrique absorbée maximale du dispositif de chauffage en watts par rapport à la valeur cible de débit en ml/min est entre 5 et 8,5, la fonction de réglage réalisée par les premiers moyens de réglage étant une régulation PD et la fonction de réglage réalisée par les deuxièmes moyens de réglage étant une régulation PI.

2. Dispositif selon la revendication 1,
**caractérisé en ce**
**qu'**une constante de temps de régulateur des deuxièmes moyens de réglage est plus longue qu'une constante de temps de régulateur des premiers moyens de réglage.

3. Dispositif selon la revendication 1 ou la revendication 2,
**caractérisé en ce que**
les moyens de pompe, qui sont réalisés comme pompe de vibration ou pompe à induit oscillant, reçoivent un signal alternatif qui est modulé par coupe de phase ou un signal pulsé qui est modulé dans la largeur d'impulsion des deuxièmes moyens de réglage.

4. Dispositif selon l'une quelconque des revendications 1 à 3,
**caractérisé en ce que**
les premiers et les deuxièmes moyens de réglage sont réalisés par une unité de microcontrôleur ou de microprocesseur de préférence commune.

5. Dispositif selon l'une quelconque des revendications 1 à 4,
**caractérisé en ce que**
des moyens de détecteur de tension de réseau sont assignés à un raccordement de tension de réseau du dispositif de préparation qui est raccordé pour le fonctionnement électrique du dispositif de chauffage de telle manière
qu'en réponse à un signal de détecteur qui dépend d'une tension de réseau détectée à un moment donné, une fonctionnalité de réglage des premiers moyens de réglage peut être influencée électriquement, notamment une contribution de puissance électrique d'une différence de tension de réseau qui diffère d'une valeur cible de tension de réseau sur le dispositif de chauffage peut être considérée ou compensée.

6. Dispositif selon l'une quelconque des revendications 1 à 5,
**caractérisé en ce que**
le dispositif de chauffage a un bloc thermique ou est réalisé par un bloc thermique.

7. Dispositif selon l'une quelconque des revendications 1 à 6,
**caractérisé en ce que**
le dispositif de chauffage a des moyens de détecteur de chaleur, notamment une thermistance qui a un coefficient de température négatif et dont le signal de sortie est appliqué aux premiers moyens de réglage.

8. Utilisation d'un dispositif de préparation selon l'une quelconque des revendications 1 à 7 comme machine à café en portions, notamment comme machine à café en capsules pour l'usage domestique ou privé, ou comme machine à café entièrement automatique qui a des moyens de découpage en portions pour des grains de café en vrac qui sont disposés en amont de l'unité de brassage et un broyeur pour les grains de café.
